(19) Europäisches Patentamt
European Patent Office
Office européen des brevets

(11) **EP 2 621 118 A1**

(12) **EUROPEAN PATENT APPLICATION**
published in accordance with Art. 153(4) EPC

(43) Date of publication:
**31.07.2013 Bulletin 2013/31**

(51) Int Cl.:
*H04J 3/16* *(2006.01)*     *H04B 10/00* *(2013.01)*
*H04L 27/26* *(2006.01)*

(21) Application number: **11857968.9**

(22) Date of filing: **15.11.2011**

(86) International application number:
**PCT/CN2011/082199**

(87) International publication number:
**WO 2012/167551 (13.12.2012 Gazette 2012/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Huawei Technologies Co., Ltd.
Shenzhen, Guangdong 518129 (CN)**

(72) Inventors:
• **DONG, Limin
Shenzhen, Guangdong 518129 (CN)**

• **WU, Qiuyou
Shenzhen, Guangdong 518129 (CN)**

(74) Representative: **Epping - Hermann - Fischer
Patentanwaltsgesellschaft mbH
Ridlerstraße 55
80339 München (DE)**

(54) **METHOD, DEVICE AND SYSTEM FOR TRANSMITTING SERVICE DATA ON OPTICAL TRANSPORT NETWORK**

(57) The embodiments of the present invention provide a method, an apparatus, and a system for transmitting service data on an optical transport network. The method includes: mapping the service data into a low order flexible optical channel data unit (ODUflex); multiplexing multiple low order ODUflexs into a high order ODUflex; adding a forward error correction (FEC) overhead into the high order ODUflex to generate a flexible optical channel transport unit (OTUflex); and splitting the OTUflex into multiple data channel signals, and modulating the data channel signals to orthogonal frequency division multiplexing subcarriers to send the orthogonal frequency division multiplexing subcarriers. The foregoing technical solution provides OTUflexs. Therefore, the network adapts service data for flexibly variable line rates of the optical transport network through a control protocol, and transmits service data of different rates to meet the development requirements of higher-rate optical transport networks.

FIG. 2

**Description**

**FIELD OF THE TECHNOLOGY**

The present invention relates to optical communication field, and in particular, to a method, an apparatus, and a system for transmitting service data on an optical transport network.

**BACKGROUND OF THE INVENTION**

As a core technology of the next-generation transport network, an Optical Transport Network (OTN) includes technical specifications of an electric layer and an optical layer, has rich capabilities such as Operation Administration and Maintenance (OAM), powerful Tandem Connection Monitor (TCM), and out-band Forward Error Correction (FEC), and can schedule and manage large-capacity services flexibly. Therefore, the OTN has an increasing tendency of becoming a mainstream technology of a backbone transport network.

With popularization and rapid development of applications such as Internet, cloud computing and so on, information traffic increases exponentially, which requires the OTN as a backbone transport pillar to provide more available bandwidths. The optical transmission technology of a 100 G rate has put into commercial application maturely, and the optical transmission technology of a rate higher than 100 G is being developed in the art, such as an optical transport technology of a rate of 400 G or 1T characterized by higher spectrum efficiency. Such a tendency imposes challenges to the existing optical transport network system. To achieve a higher spectrum efficiency, high order modulation is required, such as n-order Quadrature Amplitude Modulation (nQAM) and Orthogonal Frequency Division Multiplexing (OFDM) technologies. Under the same transmission distance, a higher Optical Signal Noise Ratio (OSNR) is required. It is expected in the art that the future optical transport network can flexibly select parameters such as optical modulation mode according to the transmitted service traffic and the transmission distance to accomplish optimum efficient network configuration.

The existing OTN system provides four fixed line rates, expressed as Optical Channel Transport Unit-k (OTUk), where k = 1, 2, 3, and 4. That is, the line rates include OTU1, OTU2, OTU3, and OTU4. ODU1 is of a 2.5 Gb/s rate level, ODU2 is of a 10 Gb/s rate level, ODU3 is of a rate 40 Gb/s level, and ODU4 is of a 112 Gb/s rate level. To support data services flexibly, a Flexible Optical Channel Data Unit (ODUflex) is added in the OTN to adapt data services that require different bandwidths. However, the fixed line rate level of the optical transport network does not meet the flexible bandwidth requirements of the service layer, and is not good for the optical layer to develop toward higher rates.

**SUMMARY OF THE INVENTION**

Embodiments of the present invention provide a method, an apparatus and a system for transmitting service data on an optical transport network to adapt service data for flexibly variable line rates of the optical transport network.

A method for transmitting service data on an optical transport network includes: mapping the service data into a low order flexible optical channel data unit (ODUflex); multiplexing multiple low order ODUflexs into a high order ODUflex; adding a forward error correction (FEC) overhead to the high order ODUflex to generate a flexible optical channel transport unit (OTUflex); and splitting the OTUflex into multiple data channel signals, and modulating the data channel signals to orthogonal frequency division multiplexing subcarriers to send the orthogonal frequency division multiplexing subcarriers.

Further, a method for transmitting service data on an optical transport network includes: demodulating received orthogonal frequency division multiplexing subcarriers to data channel signals, and combining the data channel signals into an OTUflex; demapping the OTUflex to a high order ODUflex; demultiplexing the high order ODUflex to low order ODUflexs; and demapping the low order ODUflexs to service data.

Further, an apparatus for transmitting service data on an optical transport network includes: a mapping unit, configured to map the service data into a low order ODUflex; a multiplexing unit, configured to multiplex multiple low order ODUflexs generated as a result of mapping by the mapping unit into a high order ODUflex; a generating unit, configured to add a FEC overhead into the high order ODUflex generated as a result of multiplexing by the multiplexing unit to generate an OTUflex; and a modulating unit, configured to split the OTUflex generated by the generating unit into multiple data channel signals, and modulate the data channel signals to orthogonal frequency division multiplexing subcarriers to send the orthogonal frequency division multiplexing subcarriers.

Further, an apparatus for transmitting service data on an optical transport network includes: a demodulating unit, configured to demodulate received orthogonal frequency division multiplexing subcarriers to data channel signals, and combine the data channel signals into an OTUflex; a generating unit, configured to remove a FEC overhead from the OTUflex generated as a result of demodulation by the demodulating unit to generate a high order ODUflex; and a demultiplexing unit, configured to demultiplex the high order ODUflex generated by the generating unit to low order ODUflexs; and a demapping unit, configured to demap the low order ODUflexs generated as a result of demultiplexing by the demultiplexing unit to service data.

Further, a system for transmitting service data on an optical transport network is provided. The system includes the foregoing apparatus.

The foregoing technical solutions provide OTUflexs. Therefore, the network adapts service data for flexibly variable line rates of the optical transport network through a control protocol, and transmits service data of different rates to meet the development requirements of higher-rate optical transport networks.

## BRIEF DESCRIPTION OF THE DRAWINGS

To describe the technical solutions of the present invention more clearly, the following outlines the accompanying drawings used in description of the embodiments of the present invention or the prior art. Apparently, the accompanying drawings are illustrative rather than exhaustive, and persons of ordinary skill in the art can derive other drawings from them without any creative effort.

FIG. 1 is a schematic diagram of a relevant OTN rate hierarchy;

FIG. 2 is a flowchart of a method for transmitting service data on an optical transport network according to an embodiment of the present invention;

FIG. 3A to FIG. 3F are schematic diagrams of a method for transmitting service data on an optical transport network according to another embodiment of the present invention;

FIG. 4 is a schematic diagram of an OTN rate hierarchy according to an embodiment of the present invention;

FIG. 5 is a flowchart of another method for transmitting service data on an optical transport network according to an embodiment of the present invention;

FIG. 6 is a block diagram of an apparatus for transmitting service data on an optical transport network according to an embodiment of the present invention;

FIG. 7 is a block diagram of another apparatus for transmitting service data on an optical transport network according to an embodiment of the present invention; and

FIG. 8 is a block diagram of a system for transmitting service data on an optical transport network according to an embodiment of the present invention.

## DETAILED DESCRIPTION OF THE EMBODIMENTS

The following detailed description is given in conjunction with the accompanying drawings in order to provide a thorough understanding of the present invention. Evidently, the drawings and the detailed description are merely representative of particular embodiments of the present invention rather than all embodiments. All other embodiments, which can be derived by those skilled in the art from the embodiments given herein without any creative effort, shall fall within the protection scope of the present invention.

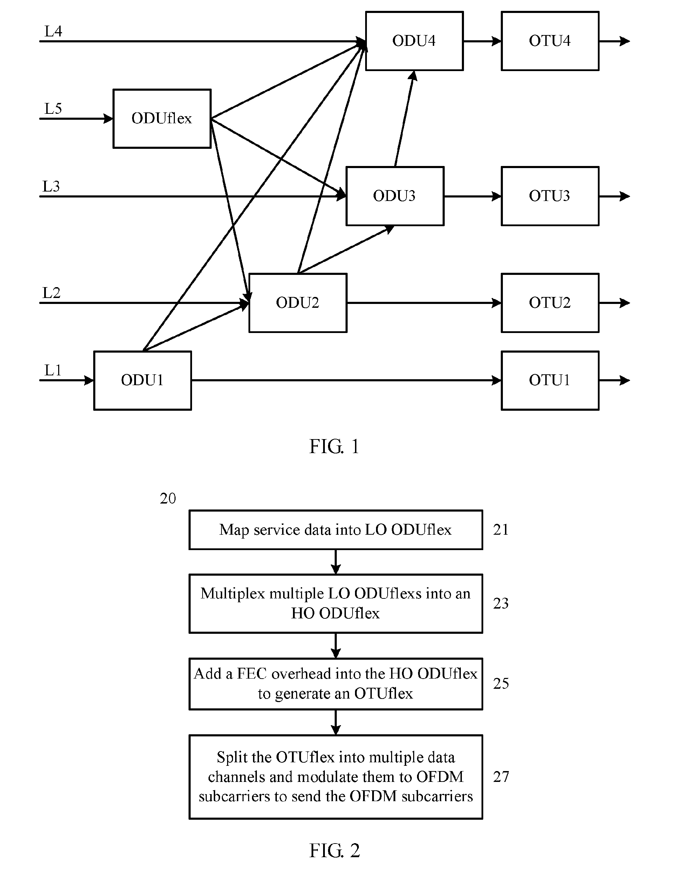

FIG. 1 is a schematic diagram of a relevant OTN rate hierarchy.

L1 to L4 in FIG. 1 represent service data of different fixed transmission rates in ascending order, respectively. For example, L1 is service data of STM-16 mode, L2 is service data of STM-64 mode, L3 is service data of STM-256 mode, and L4 is service data of 100G Ethernet (100 GE) mode. L5 represents service data of various rates.

The physical layer-relevant interface standard (G.709 protocol) recommendations define four line rates: OTU1, OTU2, OTU3, and OTU4, and four optical channel data units (ODUk, Optical Channel Data Unit-k) corresponding to the line rates: ODU1, ODU2, ODU3, and ODU4. The ODUs break down into High Order ODU (HO ODU) and Low Order ODU (LO ODU). Service data is mapped into the low order ODU, and the mapped service data is multiplexed through the low order ODU into the high order ODU. For example, taking the ODU1 shown in FIG. 1 as an example, ODU1 is multiplexed through ODU2 and ODU3 into ODU4 repeatedly, or ODU1 is multiplexed into ODU4 directly or multiplexed through ODU2 into ODU3, and so on. The ODUflex is adaptable to data services of different rates from L5, and then multiplexed into a high order ODU. The high order ODU generates the corresponding OUT rate level so as to transmit service data onto the OTN.

In the relevant OTN rate hierarchy, only 4 fixed line rates exist, and are not enough for meeting the development requirements of higher-rate OTNs. The embodiments of the present invention provide a method, an apparatus, and a system for transmitting service data on an OTN to solve the foregoing problem.

FIG. 2 is a flowchart of a method 20 for transmitting service data on an optical transport network according to an embodiment of the present invention. What is shown in FIG. 2 is a transmitter-side method. As shown in FIG. 2, the method 20 includes the following steps:

Step 21: Map the service data into a Low Order flexible ODU (LO ODUflex).

Step 23: Multiplex multiple LO ODUflexs into a High Order flexible ODU (HO ODUflex).

Step 25: Add a FEC overhead into the HO ODUflex to generate a flexible OTU (OTUflex).

EP 2 621 118 A1

Step 27: Split the OTUflex into multiple data channel signals, and modulate the data channel signals to orthogonal frequency division multiplexing (OFDM) subcarriers to send the OFDM subcarriers.

This embodiment can provide OTUflexs, so as to make the network adapt the service data for flexibly variable line rates of the optical transport network through a control protocol, and realize to transmit service data of different rates to meet the development requirements of higher-rate optical transport networks.

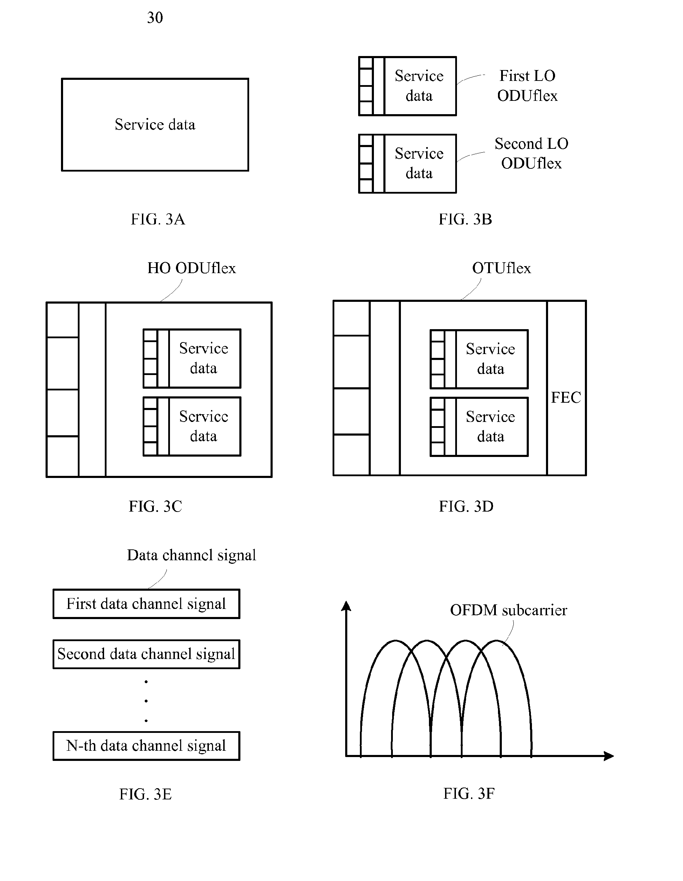

FIG. 3A to FIG. 3F are schematic diagrams of a method 30 for transmitting service data on an optical transport network according to an embodiment of the present invention. The method 30 is a transmitter-side method.

As shown in FIG. 3A to FIG. 3B, the service data is mapped into multiple LO ODUflexs. The mapping may be performed through a generic framing procedure (GFP), or through synchronous mapping. For ease of description, FIG. 3 shows two LO ODUflexs: a first LO ODUflex and a second LO ODUflex. However, the number of LO ODUflexs is not limited herein.

As shown in FIG. 3C, the first LO ODUflex and the second LO ODUflex are multiplexed into an HO ODUflex. The multiplexing may be implemented through a Generic Mapping Procedure (GMP).

As shown in FIG. 3D, a FEC overhead is added into the HO ODUflex to generate an OTUflex.

In the foregoing step, rate $V_1$ of the OTUflex and rate $V_2$ of the HO ODUflex fulfill formula 1:

$$V_1 = 255/239 \times V_2 \qquad \text{Formula 1}$$

Besides, before the rate $V_1$ of the OTUflex and the rate $V_2$ of the HO ODUflex fulfill the formula 1, it is restricted that both the rate $V_1$ of the OTUflex and first rate $V_3$ fulfill formula 2.

$$V_1 = N \times V_3 \qquad \text{Formula 2}$$

The value of the first rate $V_3$ may be set according to the optical Frequency Grid (FG) defined by the International Telecommunication Union - Telecommunication (ITU-T) G.694.1. N is a positive integer greater than 2.

The OTN rate levels from 2.5 Gbps to 100 Gbps already exist and are deployed on the network massively. To be compatible with such rates, the rate of the OTUflex may be defined as only the rate level greater than OTU4. Therefore, when the FG is selected as 6.25 GHz, namely, the first rate $V_3$ is 6.25 Gbps, N is a positive integer greater than or equal to 18. When the FG is selected as 12.5 G, namely, the first rate $V_3$ is 12.5 Gbps, N is a positive integer greater than or equal to 9.

As shown in FIG. 3E, the OTUflex is split into multiple data channel signals.

The OTUflex may be split into N data channel signals of the first rate $V_3$ according to the rate $V_1$ of the OTUflex.

When the first rate $V_3$ is selected as 6.25 Gbps, the OTUflex is split into 18 data channel signals (lane) of the first rate $V_3$ according to the rate $V_1$ of the OTUflex.

As shown in FIG. 3F, the data channel signals are modulated to orthogonal frequency division multiplexing subcarriers to send the orthogonal frequency division multiplexing subcarriers.

The N data channel signals, which are a result of splitting the OTUflex, are respectively modulated to each OFDM subcarrier. One OFDM subcarrier may correspond to one or more data channel signals, which depends on modulation format of each OFDM subcarrier. For example, corresponding to a Quadrature Phase Shift Keying (QPSK) modulation mode, one OFDM subcarrier corresponds to 2 data channel signals; or corresponding to a PM-QPSK (where PM refers to Polarization Multiplex) modulation format, one OFDM subcarrier corresponds to 4 data channel signals; or corresponding to a PM-16QAM modulation format, one OFDM subcarrier corresponds to 8 data channel signals.

When the bandwidth of the service to be sent needs to increase or decrease, the network control may select OFDM subcarrier spectrum and the demodulation format according to parameters of the optical layer physical link for transmitting the service, for example, required transmission distance and spectrum bandwidth restriction, and further select a proper OTUflex rate. Once the rate of the OTUflex changes, the rate of the LO ODUflexs over the OTUflex is further adjusted according to a G.HAO (HAO, Hitless Adjustment of ODUflex) protocol, and the bandwidth of the service over the LO ODUflexs is changed.

For example, a service between the network node A and the network node B needs to be activated; the distance between A and B is known as 500 km, and the bandwidth of the service required between A and B is 200 Gbps; and the available fiber spectrum is 100 GHZ. If the required optical signal-to-noise ratio (OSNR) under a limit of an acceptable bit error rate is 19 dB, a test is carried out according to such conditions, and the test result shows that 16 OFDM subcarriers may be applied, and the modulation format of each subcarrier is BPSK. According to the formula 2, it is calculated out that N = 200G/12.5 G = 16, and then the rate of the HO ODUflex is calculated according to the formula 1. The service data is sent according to the method in FIG. 2 and FIG. 3.

When the bandwidth of the service required between A and B is increased as 400 G, the fiber spectrum bandwidth may be added to meet the requirement. The number of subcarriers changes from 16 to 32, and the subcarrier modulation format remains unchanged. The corresponding rate of the OTUflex is doubled, the value of N is doubled, and the rate of the HO ODUflex is doubled too. After the HO ODUflex is adjusted, the rate of the LO ODUflexs and the rate of the service data over the LO ODUflexs are adjusted according to the G.HAO protocol to increase the service data bandwidth.

In this example, if the OSNR tolerance available provided by the transmitter is up to 30 dB, which is more than enough for meeting the required 19 dB and can meet the requirement of the QPSK modulation format undoubtedly, each subcarrier may use the QPSK modulation format without increasing the number of the OFDM subcarriers, thereby avoiding increase of the fiber spectrum bandwidth. The corresponding rate of the OTUflex is doubled, the value of N is doubled, and the rate of the HO ODUflex is doubled too. After the HO ODUflex is adjusted, the rate of the LO ODUflex and the rate of the service data over the LO ODUflex are adjusted according to the G.HAO protocol to increase the service data bandwidth.

This embodiment provides OTUflexs. Therefore, the network adapts service data for flexibly variable line rates of the optical transport network through a control protocol, and transmits service data of different rates to meet the development requirements of higher-rate optical transport networks.

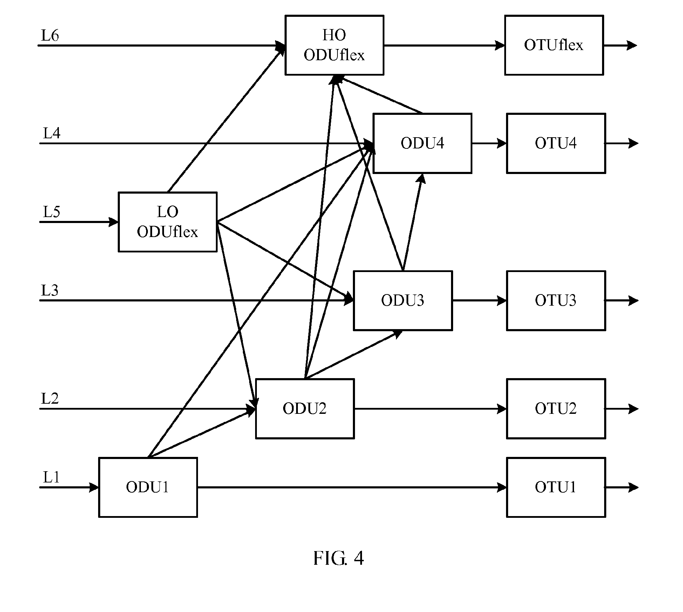

FIG. 4 is a schematic diagram of an OTN rate hierarchy according to an embodiment of the present invention.

The same reference numbers are used throughout FIG. 4 to refer to the same or similar units shown in FIG. 1. The difference from FIG. 1 is: According to this embodiment, OTUflex units are introduced, and LO ODUflex and HO ODUflex are also introduced. Therefore, the network adapts service data for flexibly variable line rates of the optical transport network through a control protocol, and transmits service data of different rates to meet the requirements of higher-rate optical transport networks such as high speed Ethernet (HSE) represented by L6.

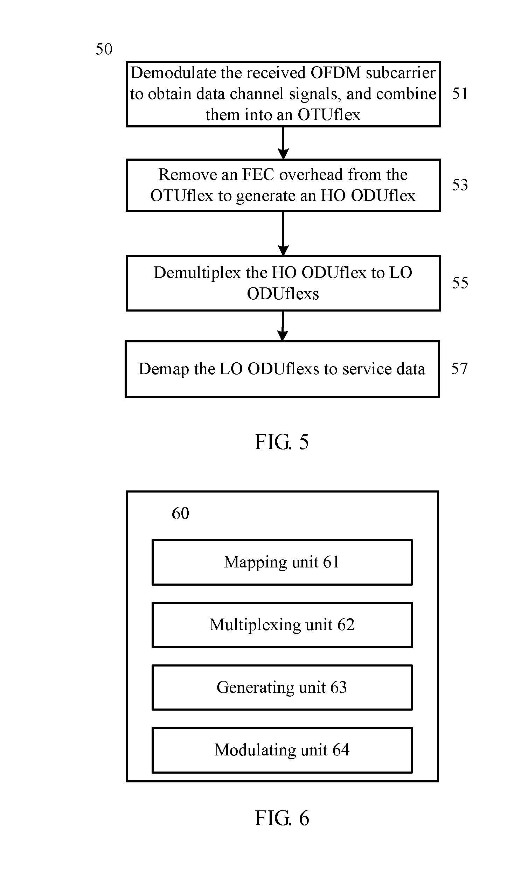

FIG. 5 is a flowchart of another method 50 for transmitting service data on an optical transport network according to an embodiment of the present invention. FIG. 5 shows a receiver-side method. As shown in FIG. 5, the method 50 includes the following steps:

Step 51: Demodulate received orthogonal frequency division multiplexing subcarriers to data channel signals, and combine the data channel signals into an OTUflex.

Step 53: Remove an FEC overhead from the OTUflex to generate a high order ODUflex.

Step 55: Demultiplex the high order ODUflex to a low order ODUflex.

Step 57: Demap the low order ODUflex to service data.

This embodiment provides OTUflexs. Therefore, the network adapts service data for flexibly variable line rates of the optical transport network through a control protocol, and transmits service data of different rates to meet the development requirements of higher-rate optical transport networks.

The reverse process of the method 30 is an exemplary mode of implementing the method 50 shown in FIG. 5. By referring to the order of FIG. 3F to FIG. 3A, the following describes an embodiment of the receiver-side method 50.

As shown in FIG. 3F to FIG. 3E, the data channel signals are generated by demodulating the received orthogonal frequency division multiplexing subcarriers.

At the time of sending the OFDM subcarriers, one OFDM subcarrier may correspond to one or more data channel signals, which depends on the modulation format of each OFDM subcarrier. The receiver may demodulate one OFDM subcarrier to obtain multiple data channel signals according to the mapping relationship determined by the transmitter.

As shown in FIG. 3D, the data channel signals are combined into an OTUflex.

Because the transmitter restricts both of the rate $V_1$ of the OTUflex and the first rate $V_3$ to fulfill the formula 2, the multiple data channel signals are combined into the OTUflex according to relationship of N-fold of the first rate $V_3$. Whereas the rate of each data channel signal is equal to the first rate $V_3$.

When the first rate $V_3$ is 6.25 Gbps, 18 data channel signals are combined into the OTUflex whose rate is higher than the OTU4.

As shown in FIG. 3C, the OTUflex is stripped of the FEC overhead, and so on, to generate the HO ODUflex.

In the foregoing step, the rate $V_1$ of the OTUflex and the rate $V_2$ of the HO ODUflex meet the formula 1.

As shown in FIG. 3B, the HO ODUflex is demultiplexed to a first LO ODUflex and a second LO ODUflex.

As shown in FIG. 3A, the first LO ODUflex and the second LO ODUflex are demapped to obtain service data.

This embodiment provides OTUflexs. Therefore, the network adapts service data for flexibly variable line rates of the optical transport network through a control protocol, and transmits service data of different rates to meet the development requirements of higher-rate optical transport networks.

FIG. 6 is a block diagram of an apparatus 60 for transmitting service data on an optical transport network according to an embodiment of the present invention.

The apparatus 60 includes a mapping unit 61, a multiplexing unit 62, a generating unit 63, and a modulating unit 64.

The mapping unit 61 maps the service data into a low order ODUflex.

The multiplexing unit 62 multiplexes multiple low order ODUflexs generated as a result of mapping by the mapping unit 61 into a high order ODUflex.

The generating unit 63 adds a FEC overhead into the high order ODUflex generated as a result of multiplexing by the multiplexing unit 62 to generate an OTUflex.

The modulating unit 64 splits the OTUflex generated by the generating unit 63 into multiple data channel signals, and modulates the data channel signals to orthogonal frequency division multiplexing subcarriers to send the orthogonal frequency division multiplexing subcarriers.

The apparatus 60 implements the method 20 and the method 30, whose details are not repeated here any further.

This embodiment provides OTUflexs. Therefore, the network adapts service data for flexibly variable line rates of the optical transport network through a control protocol, and transmits service data of different rates to meet the development requirements of higher-rate optical transport networks.

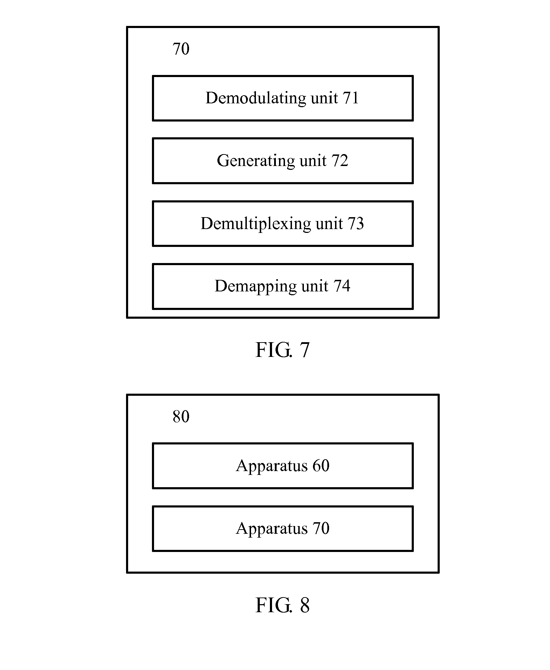

FIG. 7 is a block diagram of another apparatus 70 for transmitting service data on an optical transport network according to an embodiment of the present invention.

The apparatus 70 includes a demodulating unit 71, a generating unit 72, a demultiplexing unit 73, and a demapping unit 74.

The demodulating unit 71 demodulates received orthogonal frequency division multiplexing subcarriers to data channel signals, and combines the data channel signals into an OTUflex.

The generating unit 72 removes a FEC overhead from the OTUflex generated as a result of demodulation by the demodulating unit 71 to generate a high order ODUflex.

The demultiplexing unit 73 demultiplexes the high order ODUflex generated by the generating unit 72 to low order ODUflexs.

The demapping unit 74 demaps the low order ODUflexs generated as a result of demultiplexing by the demultiplexing unit 73 to service data.

The apparatus 70 implements the method 50, whose details are not repeated here any further.

This embodiment provides OTUflexs. Therefore, the network adapts service data for flexibly variable line rates of the optical transport network through a control protocol, and transmits service data of different rates to meet the development requirements of higher-rate optical transport networks.

FIG. 8 is a block diagram of a system 80 for transmitting service data on an optical transport network according to an embodiment of the present invention.

The system 80 includes the apparatus 60 and the apparatus 70, whose details are not repeated here any further.

This embodiment provides OTUflexs. Therefore, the network adapts service data for flexibly variable line rates of the optical transport network through a control protocol, and transmits service data of different rates to meet the development requirements of higher-rate optical transport networks.

Persons of ordinary skill in the art are aware that the various exemplary units and algorithm steps described in connection with the embodiments disclosed herein can be implemented as electronic hardware, or a combination of computer software and electronic hardware. Whether such functionality is implemented as hardware or software depends upon the particular application of the technical solution and design constraints. Skilled artisans may implement the described functionality in varying ways for each particular application, but such implementation decisions should not be interpreted as causing a departure from the scope of the present information.

Those skilled in the art understand that, for convenience and brevity of description, the detailed working procedures of the systems, apparatuses, and units described above can be deduced effortlessly from the corresponding procedures in the method embodiments, and are not repeated herein.

Understandably, in the embodiments described herein, the disclosed systems, apparatuses and methods may be implemented in other modes. For example, the apparatus embodiments above are illustrative in nature, and the units of the apparatus are defined from the perspective of logical functions only and may be defined in a different way in practical application. For example, multiple units or components may be combined or integrated into another system, or some features may be ignored or not executed. Besides, the coupling, direct coupling or communication connection illustrated or discussed herein may be implemented through indirect coupling or communication connection between interfaces, apparatuses or units, and may be electronic, mechanical, or in other forms.

The units described as stand-alone components above may be separated physically or not; and the components illustrated as units may be physical units or not, namely, they may be located in one place, or distributed on multiple network elements. Some or all of the units described above may be selected as required to fulfill the objectives of the technical solutions of the present invention.

Besides, all function units in the embodiments of the present invention may be physically stand-alone, or integrated into a processing module, or two or more of the units are integrated into one unit.

When being implemented as a software function unit and sold or used as a stand-alone product, the functionality may be stored in a computer-readable storage medium. Therefore, the essence of the technical solutions of the present invention, or contribution to the prior art, or a part of the technical solutions, may be embodied in a software product. The software product is stored in a computer-readable storage medium and incorporates several instructions causing a computer device (for example, personal computer, server, or network device) to execute all or part of the steps of the method specified in any embodiment of the present invention. Examples of the storage medium include various media capable of storing program codes, such as USB flash disk, mobile hard disk, read-only memory (ROM, Read-Only Memory), random access memory (RAM, Random Access Memory), magnetic disk, or CD-ROM.

The above descriptions are merely preferred embodiments of the present invention, but not intended to limit the protection scope of the present invention. Any modifications, variations or replacement that can be easily derived by those skilled in the art without departing from the spirit of the present invention shall fall within the protection scope of the present invention. Therefore, the protection scope of the present invention is subject to the appended claims.

**Claims**

1.  A method for transmitting service data on an optical transport network, comprising:

    mapping the service data into a low order flexible optical channel data unit (ODUflex);
    multiplexing multiple low order ODUflexs into a high order ODUflex;
    adding a forward error correction (FEC) overhead into the high order ODUflex to generate a flexible optical channel transport unit (OTUflex); and
    splitting the OTUflex into multiple data channel signals, and modulating the data channel signals to orthogonal frequency division multiplexing subcarriers to send the orthogonal frequency division multiplexing subcarriers.

2.  The method according to claim 1, wherein:

    a rate of the OTUflex is equal to N-fold of a first rate, wherein N is a positive integer greater than 1.

3.  The method according to claim 1 or 2, wherein:

    the splitting the OTUflex into multiple data channel signals comprises:

    splitting the OTUflex into N data channel signals whose rate is the first rate according to the OTUflex, wherein N is a positive integer greater than 2.

4.  The method according to claim 2 or 3, wherein:

    when the first rate is 6.25 Gbps, N is a positive integer greater than or equal to 18; or
    when the first rate is 12.5 Gbps, N is a positive integer greater than or equal to 9.

5.  The method according to any one of claims 1-4, wherein:

    the adding the FEC overhead into the high order ODUflex to generate the OTUflex comprises:

    making the rate of the high order ODUflex and the rate of the OTUflex fulfill: the rate of the OTUflex = $255/239 \times$ the rate of the high order ODUflex.

6.  The method according to any one of claims 1-4, wherein:

    the mapping the service data into the low order ODUflex comprises:

    mapping the service data into the low order ODUflex through a generic framing procedure (GFP).

7.  The method according to any one of claims 1-4, wherein:

    the multiplexing multiple low order ODUflexs into the high order ODUflex comprises:

    multiplexing multiple low order ODUflexs into the high order ODUflex through a generic mapping procedure (GMP) .

8. The method according to any one of claims 1-4, wherein:

the modulating the data channel signals to the orthogonal frequency division multiplexing subcarriers comprises:

a corresponding relationship exists between number of modulated data channel signals and one orthogonal frequency division multiplexing subcarrier according to different modulation formats of the orthogonal frequency division multiplexing subcarrier.

9. A method for transmitting service data on an optical transport network, comprising:

demodulating received orthogonal frequency division multiplexing subcarriers to data channel signals, and combining the data channel signals into a flexible optical channel transport unit (OTUflex);
demapping the OTUflex to a high order flexible optical channel data unit (ODUflex);
demultiplexing the high order ODUflex to low order ODUflexs; and
demapping the low order ODUflexs to service data.

10. An apparatus for transmitting service data on an optical transport network, comprising:

a mapping unit, configured to map the service data into a low order flexible optical channel data unit (ODUflex);
a multiplexing unit, configured to multiplex multiple low order ODUflexs generated as a result of mapping by the mapping unit into a high order ODUflex;
a generating unit, configured to add a forward error correction (FEC) overhead into the high order ODUflex generated as a result of multiplexing by the multiplexing unit to generate a flexible optical channel transport unit (OTUflex); and
a modulating unit, configured to split the OTUflex generated by the generating unit into multiple data channel signals, and modulate the data channel signals to orthogonal frequency division multiplexing subcarriers to send the orthogonal frequency division multiplexing subcarriers.

11. The apparatus according to claim 10, wherein:

a rate of the OTUflex generated by the generating unit is equal to N-fold of a first rate, wherein N is a positive integer greater than 1.

12. The apparatus according to claim 10 or 11, wherein:

the modulating unit splits the OTUflex into N data channel signals whose rate is the first rate according to the OTUflex, wherein N is a positive integer greater than 2.

13. The apparatus according to claim 11 or 12, wherein:

when the first rate is 6.25 Gbps, N is a positive integer greater than or equal to 18; or
when the first rate is 12.5 Gbps, N is a positive integer greater than or equal to 9.

14. The apparatus according to any one of claims 10-13, wherein:

the generating unit makes the rate of the high order ODUflex and the rate of the OTUflex fulfill: the rate of the OTUflex = 255/239 $\times$ the rate of the high order ODUflex.

15. The apparatus according to any one of claims 10-13, wherein:

the mapping unit maps the service data into the low order ODUflex through a generic framing procedure.

16. The apparatus according to any one of claims 10-13, wherein:

the multiplexing unit multiplexes multiple low order ODUflexs into the high order ODUflex through a generic mapping procedure.

17. The apparatus according to any one of claims 10-13, wherein:

a corresponding relationship exists between number of data channel signals modulated by the modulating unit and one orthogonal frequency division multiplexing subcarrier according to different modulation formats of the orthogonal frequency division multiplexing subcarrier.

18. An apparatus for transmitting service data on an optical transport network, comprising:

a demodulating unit, configured to demodulate received orthogonal frequency division multiplexing subcarriers to data channel signals, and combine the data channel signals into a flexible optical channel transport unit (OTUflex);
a generating unit, configured to remove a forward error correction (FEC) overhead from the OTUflex generated as a result of demodulation by the demodulating unit to generate a high order flexible optical channel data unit (ODUflex);
a demultiplexing unit, configured to demultiplex the high order ODUflex generated by the generating unit to low order ODUflexs; and
a demapping unit, configured to demap the low order ODUflexs generated as a result of demultiplexing by the demultiplexing unit to service data.

19. A system for transmitting service data on an optical transport network, comprising an apparatus specified in any one of claims 10-17, and an apparatus specified in claim 18.

FIG. 1

FIG. 2

30

Service data

FIG. 3A

Service data — First LO ODUflex

Service data — Second LO ODUflex

FIG. 3B

HO ODUflex

Service data

Service data

FIG. 3C

OTUflex

Service data

Service data

FEC

FIG. 3D

Data channel signal

First data channel signal

Second data channel signal

．
．
．

N-th data channel signal

FIG. 3E

OFDM subcarrier

FIG. 3F

FIG. 4

50

| Demodulate the received OFDM subcarrier to obtain data channel signals, and combine them into an OTUflex | 51 |

↓

| Remove an FEC overhead from the OTUflex to generate an HO ODUflex | 53 |

↓

| Demultiplex the HO ODUflex to LO ODUflexs | 55 |

↓

| Demap the LO ODUflexs to service data | 57 |

FIG. 5

60

| Mapping unit 61 |

| Multiplexing unit 62 |

| Generating unit 63 |

| Modulating unit 64 |

FIG. 6

70

Demodulating unit 71

Generating unit 72

Demultiplexing unit 73

Demapping unit 74

FIG. 7

80

Apparatus 60

Apparatus 70

FIG. 8

<div align="center">

# INTERNATIONAL SEARCH REPORT

</div>

| International application No. |
|---|
| PCT/CN2011/082199 |

**A.  CLASSIFICATION OF SUBJECT MATTER**

See the extra sheet
According to International Patent Classification (IPC) or to both national classification and IPC

**B.   FIELDS SEARCHED**

Minimum documentation searched (classification system followed by classification symbols)

IPC:H04L,H04Q,H04W

Documentation searched other than minimum documentation to the extent that such documents are included in the fields searched

Electronic data base consulted during the international search (name of data base and, where practicable, search terms used)

CNABS,CNTXT,CNKI,VEN:ODU, FEC, OFDM, OUT, optical w channel w data w unit, orthogonal w frequency w division w multiple, optical w channel w transport w unit, forward w error w correction, split+, map+, multiplex+, modulat+

**C.   DOCUMENTS CONSIDERED TO BE RELEVANT**

| Category* | Citation of document, with indication, where appropriate, of the relevant passages | Relevant to claim No. |
|---|---|---|
| A | CN101841741A(Huawei Technologies Co., Ltd.) 22 Sept. 2010(22.09.2010) the whole document | 1-19 |
| A | INTERNATIONAL TELECOMMUNICATION UNION, Interfaces for the Optical Transport Network(OTN), ITU-T G.709/Y.1331 Mar. 2003, section 7 | 1-19 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
|---|---|
| 31 Jul. 2012(31.07.2012) | 23 Aug. 2012(23.08.2012) |

| Name and mailing address of the ISA State Intellectual Property Office of the P. R. China No. 6, Xitucheng Road, Jimenqiao Haidian District, Beijing 100088, China Facsimile No. (86-10)62019451 | Authorized officer SUN, Zhiling Telephone No. (86-10)62411252 |
|---|---|

Form PCT/ISA /210 (second sheet) (July 2009)

## INTERNATIONAL SEARCH REPORT
Information on patent family members

International application No.

PCT/CN2011/082199

| Patent Documents referred | Publication Date | Patent Family | Publication Date |
|---|---|---|---|
| CN101841741A | 22.09.2010 | EP2410673A1 | 25.01.2012 |
| | | US2012002671A1 | 05.01.2012 |
| | | WO2010105546A1 | 23.09.2010 |
| | | EP2410673A4 | 28.03.2012 |

Form PCT/ISA /210 (patent family annex) (July 2009)

**INTERNATIONAL SEARCH REPORT**

International application No.

PCT/CN2011/082199

Continue of **A.    CLASSIFICATION OF SUBJECT MATTER**

H04Q 11/00(2006.01)i

H04L 27/26(2006.01)i

Form PCT/ISA /210 (extra sheet) (July 2009)